# EUROPEAN PATENT SPECIFICATION

(11) **EP 3 016 834 B1**
(45) Date of publication and mention of the grant of the patent: **11.09.2019**
(21) Application number: 14741427.0
(22) Date of filing: 07.07.2014
(51) Int. Cl.: B62D 11/20, B62D 15/00, B65G 41/00, B64F 1/32, G05D 1/02

(54) **AUTOMATICALLY CONTROLLED VEHICLE FOR TRANSPORTING AN OBJECT AND OBJECT TRANSPORT SYSTEM**
AUTOMATISCH GESTEUERTES FAHRZEUG ZUM TRANSPORTIEREN EINES OBJEKTES UND OBJEKTTRANSPORTSYSTEM
VÉHICULE À CONTRÔLE AUTOMATIQUE POUR TRANSPORTER UN OBJET, ET SYSTÈME DE TRANSPORT POUR OBJETS

(30) Priority: 05.07.2013 NL 2011115
(43) Date of publication of application: 11.05.2016
(73) Proprietor: Vanderlande Industries B.V., 5466 RB Veghel (NL)
(72) Inventor: POTTERS, Marinus Adrianus Maria, NL-5652 EM Eindhoven (NL); KROP, Bas, NL-5658 HD Eindhoven (NL)
(74) Representative: Algemeen Octrooi- en Merkenbureau B.V.
(86) International application number: PCT/NL2014/050451
(87) International publication number: WO 2015/002540

(56) References cited:
- EP-A1- 1 112 913
- DE-A1- 4 315 337
- DE-A1-102010 007 014
- US-A- 5 456 332

## Description

The present invention relates to an automatically controlled vehicle for transporting an object such as an item of luggage or goods similar thereto such as a parcel.

The present invention further relates to transport system for such objects comprising a number of such vehicles.

US 5,456,332 and DE 10 2010 007014 A1 relate to a vehicle according to the preamble of claim 1.

EP 1 112 913 A1 relates to an articulated machine, particularly an earth-moving machine.

An object of the present invention is to provide an automatically controlled vehicle for transporting an object such as an item of luggage or goods similar thereto such as a parcel which is cost-effective, robust, of simple construction and with which such an object can be transported in efficient manner.

Said object is achieved with the vehicle according to the present invention, comprising:
- a chassis having on an upper side a carrying surface for the object,
- a first wheel support arm connected to the chassis for pivoting about a first pivot axis and having respectively a left and right first wheel at the opposite outer ends thereof,
- a second wheel support arm connected to the chassis for pivoting about a second pivot axis located at a distance from the first pivot axis and having respectively a left and right second wheel at the opposite outer ends thereof,
- per wheel an electric drive motor connected thereto for driving the relevant wheel,
- a control unit for separate control of each of the drive motors,
- a source of electrical energy such as a battery which is connected to each of the drive motors and to the control unit,
wherein the chassis is formed at least substantially by an elongate central chassis beam extending in a longitudinal direction of the vehicle, wherein the first wheel support arm is connected to the chassis beam at a first distance from a first outer end of the chassis beam, and wherein the second wheel support arm is connected to the chassis beam at a second distance from a second outer end of the chassis beam.

Realized by the above described construction of the vehicle and the separate drive per wheel is an highly dynamic vehicle which is extremely suitable for rapid and reliable transport of objects such as items of luggage which lie loosely on the object carrying surface, and the variable loads associated therewith, also for instance when passing through bends and during rapid acceleration and braking. The chassis which is formed substantially by the central chassis beam and which extends to a position outside the connecting points at the position of the pivot axes of the wheel support arms enables a mounting, which is effective and resistant to bending, of a higher portion of the vehicle comprising the carrying surface.

In the context of the invention an automatically controllable vehicle is understood to mean a vehicle which, at a command from a central control unit which is not provided on the vehicle but for instance in or close to a space in which the vehicle travels over a ground surface, can travel independently over a ground surface and can for instance cover a path imposed by the central control unit while using a local control unit on the vehicle and a drive such as by electric drive motors which are connected to at least one wheel.

Although the invention relates particularly to the transport of objects such as items of luggage or similar goods such as parcels placed directly onto the carrying surface of the vehicle, also included within the context of the invention is transport with the vehicle of objects such as items of luggage received in a carrying tray such as a luggage tub, wherein a carrying tray with an object therein is thus placed on the carrying surface of the vehicle for the purpose of transport of the object by the vehicle.

The first and second pivot axes extend mutually parallel and vertically, i.e. at least substantially perpendicularly of a plane defined by the wheel axles of the wheel, or at least substantially perpendicularly of a virtual plane through contact points of said wheels with a ground surface during operation of the vehicle. The second pivot axis is further located behind the first pivot axis as seen in longitudinal direction of the vehicle.

It is favourable for the chassis beam to have a length which is at least substantially equal to a length of the vehicle as seen in longitudinal direction, wherein the first and the second distance each lie in a range of 10 percent to 30 percent of the length of the chassis beam, and are preferably each about 20 percent of the length of the chassis beam. That is, the distance between the first and second support arm at the position of the respective first and second pivot axis lies in the range of 40 to 80 percent, preferably about 60 percent, of the length of the vehicle.

It is a further favourable for the vehicle to have a width as seen in transverse direction of the vehicle wherein a track width of the wheels, or distance between the wheels, of both the first wheel support arm and the second wheel support arm lies in the range of 50 percent to 75 percent of the width of the vehicle, and is preferably about 65 percent of the width of the vehicle.

Specifically for the application of transporting an object a highly favourable ratio of transverse stability, or cornering performance, and longitudinal stability, or stability during acceleration and braking, with a highly favourable minimal turning circle, is realized with said ranges of axial spacing and track width. Furthermore, and particularly in respect of the turning circle, it is possible here to achieve that the wheels remain at all times within the outer periphery of the vehicle, this enhancing the operational reliability of the vehicle in an object processing system, such as in particular a luggage processing system or parcel processing system with a large number of such vehicles.

The vehicle according to the invention further comprises a substantially rectangularly shaped object carrying part with an object carrying element which defines the carrying surface, wherein the object carrying part is connected at a first outer end thereof to the chassis beam with a first connecting member closer to the first outer end than the first wheel support arm, and is connected at a second outer end thereof to the chassis beam with a second connecting member closer to the second outer end than the second wheel support arm. The object carrying part is preferably clear of the chassis beam between the first and second connecting members. Owing to this method of mounting the chassis contributes in large measure to the bending stiffness of the object carrying part.

It is advantageous here that the first and second connecting members each comprise a connecting plate element which at the position of the associated respective outer end of the chassis beam is connected fixedly thereto and which extends from the chassis beam laterally and upward therefrom such that the object carrying element is supported at least at the corners thereof by the connecting plate elements.

In a favourable embodiment the vehicle comprises a conveyor belt which is oriented transversely of the longitudinal direction of the vehicle and is drivable with a drive and which defines the carrying surface. The vehicle can hereby contribute actively toward for instance the unloading of an object from the vehicle by driving the conveyor belt in a desired direction so that the object is moved laterally off the vehicle.

The object carrying element preferably comprises the conveyor belt, wherein the conveyor belt is trained round respective pulley members at the position of opposite longitudinal sides of the object carrying part.

In the context of guaranteeing that an object cannot slide off the carrying surface during travel of the vehicle it is further favourable for the vehicle to have guards extending above the level of the carrying surface on at least a part of the peripheral sides of the carrying surface.

In a structurally efficient embodiment the pulley members extend between the connecting plate elements, wherein the connecting plate elements extend above the conveyor belt on the opposite transverse sides thereof so as to there form a respective transverse guard for an object such as an item of luggage present on the carrying surface.

It is moreover favourable for the vehicle to comprise on both the opposite longitudinal sides of the carrying surface a longitudinal guard which is movable in height direction of the vehicle by a moving device between an inactive position, in which the longitudinal guard lies under the carrying surface, and an active position in which the longitudinal guard extends above the carrying surface. The object present on the carrying surface can hereby be largely protected during transport from accidentally sliding off the vehicle, while for instance during unloading of the object a longitudinal guard can be moved to a position below the carrying surface so that, by driving the conveyor belt, the object can be moved laterally off the vehicle easily and without obstruction.

In a structurally favourable embodiment the longitudinal guards comprise a plate element which extends in height direction along a longitudinal side of the carrying surface and which is guided at opposite end sides in slots in the connecting plate elements.

The invention also relates to an object transport system as defined in claim 12. Advantages of the object transport system according to the invention correspond to the advantages of the above specified vehicle according to the invention.

The present invention will be elucidated hereinbelow on the basis of the description of a preferred embodiment of a vehicle according to the invention, in which:
Figure 1 is a three-dimensional view of a preferred embodiment of a vehicle according to the present invention,
Figure 2 is an exploded view of the vehicle according to figure 1,
Figure 3 is a three-dimensional view of a travelling part of the vehicle according to figure 1,
Figure 4 is a bottom view of the vehicle according to figure 1, and
Figure 5 is a bottom view of a portion of the vehicle according to figure 1 in another operative position compared to figure 4.

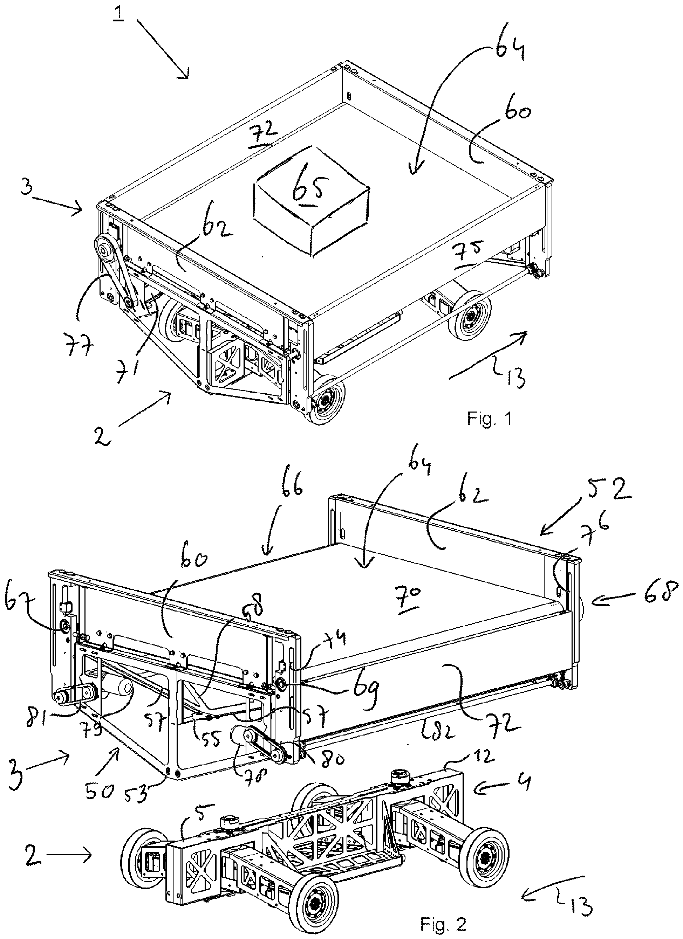

Figure 1 shows a vehicle 1 with a travelling part 2 and an object carrying part arranged on the travelling part 2 and formed by the luggage carrying part 3. The luggage carrying part 3 has a carrying surface 64 for carrying one or more objects such as items of luggage 65 for the purpose of transporting the item/items of luggage 65 between a first and a second location.

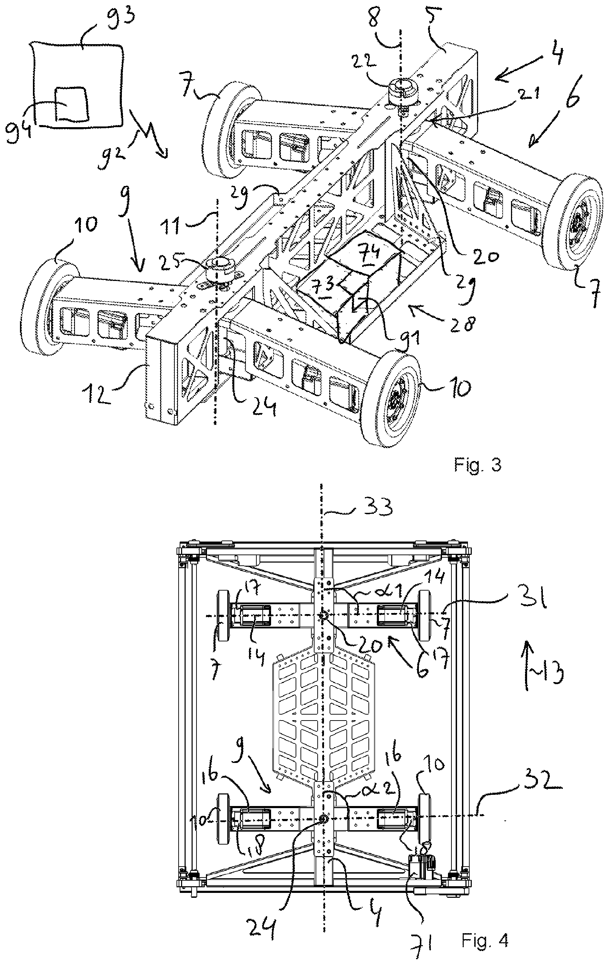

The travelling part 2 comprises an elongate chassis beam 4 which extends in longitudinal direction 13 of the vehicle 1 and lies centrally as seen in transverse direction of the vehicle 1, and which substantially forms the chassis. Provided close to a first outer end 5 of the chassis beam 4 is a first wheel support arm 6 which, at least in a neutral position of the wheel support arm 6, extends transversely of the chassis beam 4 and through the chassis beam 4. A respective first wheel 7 rotatable around a wheel axle is provided at both opposite outer ends of the first wheel support arm 6. The first wheel support arm 6 is connected centrally between the two wheels 7 to the chassis beam 4 for pivoting about a first pivot axis 8. The first pivot axis 8 extends vertically. The first pivot axis 8 further intersects the wheel axles of both first wheels 7, which wheel axles are mutually coaxial. Provided close to a second outer end 12 of the chassis beam 4 opposite the first outer end 5 is a second wheel support arm 9 which, at least in a neutral position of the wheel support arm 9, extends transversely of the chassis beam 4 and through the chassis beam 4 similarly to the first wheel support arm 6. A respective second wheel 10 rotatable around a wheel axle is provided at both opposite outer ends of the second wheel support arm 9. The second wheel support arm 9 is connected centrally between the two wheels 10 to the chassis beam 4 for pivoting about a second pivot axis 11. The second pivot axis 11 likewise extends vertically, or parallel to the first pivot axis 8. The second pivot axis 11 further intersects the wheel axles of both second wheels 10, which wheel axles are mutually coaxial. As shown particularly in figure 3 and figure 4, the described construction of the travelling part 2 of the vehicle 1 is substantially symmetrical as seen in both longitudinal direction 13 and transverse direction of the vehicle 1.

As shown particularly in figure 4, each of the wheels 7 has its own electric motor 14 which is connected thereto via a reducing gear and which is mounted on the first wheel support arm 6, and each of the wheels 10 similarly has its own electric motor 16 which is connected thereto via a reducing gear and which is mounted on the second wheel support arm 9. A respective first rotation sensor 17 is moreover connected to each of the wheels 7 for measuring rotation of the associated wheel round the wheel axle. A respective second rotation sensor 18 is connected to each of the wheels 10 for measuring rotation of the associated wheel round the wheel axle. Said rotation sensors 17, 18 are incremental encoders.

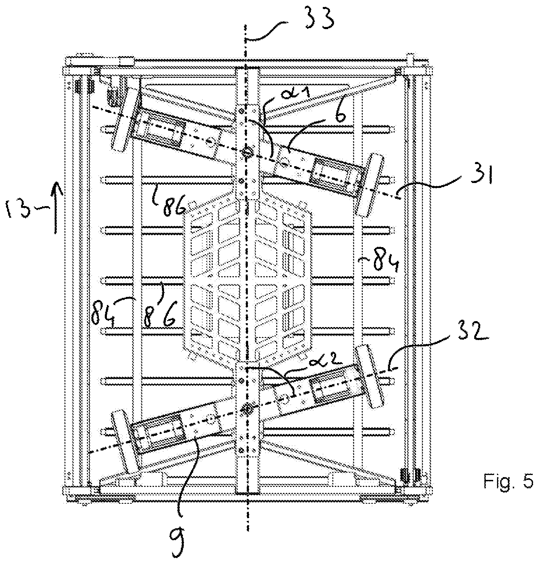

The first pivot axis 8 forms the central axis of a first shaft body 20 arranged in the first wheel support arm 6. The shaft body 20 is connected via bearings to the chassis beam 4 in a passage 21 in the chassis beam 4. In order to measure rotation of the first wheel support arm 6 round the first pivot axis 8 relative to the chassis beam 4, i.e. the angular position of the first wheel support arm 6, a first rotation sensor 22 is arranged which is connected on the one hand to the first shaft body 20 and on the other to the chassis beam 4. The first rotation sensor 20 is an absolute encoder. Said angular position is more specifically an angle α1 between the longitudinal axis 31 of the first wheel support arm 6, which longitudinal axis 31 runs coaxially to the wheel axles, and the centrally located longitudinal axis 33 of the chassis beam 4. See also figure 5. The longitudinal axis 33 of the chassis beam 4 is defined as a line lying perpendicularly of the first and second pivot axes 8, 11 and intersecting both these pivot axes 8, 11. The longitudinal axis 33 is parallel to the lengthwise direction 13 of the vehicle. The second wheel support arm 9 has the same construction, i.e. has a second shaft body 24 which is coaxial to the first pivot axis 11. A second rotation sensor 25 is operative between the chassis beam 4 and the second wheel support arm 9 for the purpose of measuring the angular position α2 of the second wheel support arm 9 relative to the chassis beam 4, i.e. an angle α2 between the longitudinal axis 32 of the second wheel support arm 9 and the longitudinal axis 33 of the chassis beam 4.

Both the first wheel support arm 6 and the second wheel support arm 9 can pivot freely around respectively the first and second pivot axis 8, 11, i.e. apart from the bearing there are further no elements generating a resetting force to the neutral position of the associated wheel support arm 6, 9. In the context of the invention the neutral position is understood to mean the position of the wheel support arms in which the vehicle 1 moves straight ahead, in line with the longitudinal direction 13 thereof. That is, the wheel support arms 6, 9 extend at right angles to the chassis beam 4. Because said pivot axes 8, 11 extend vertically, no resetting effect is brought about due to the orientation thereof. In order to prevent undesirably large angular positions α1, α2 of a wheel support arm 6, 9 end stops 29 are arranged on a central widened portion 28 of the vehicle 1.

As shown in the bottom view according to figure 4, the first and second wheel support arms 6, 9 are provided mutually parallel and at right angles to the chassis beam 4 in the neutral position during travel straight ahead. That is, the angles α1 and α2 are both 90 degrees. In the bottom view according to figure 5 in which the transverse belt 70 is not shown, the position of the wheel support arms 6, 9 is shown when negotiating a bend. In this situation the wheels associated with each wheel support arm 6, 9 are driven in an embodiment such that the angular positions α1, α2 of the respective wheel support arms 6, 9 relative to the chassis are of the same magnitude but of opposite direction relative to the right-angled neutral position. In the example shown in figure 5 α1 is about 90 + 20 = 110 degrees, while α2 is about 90 - 20 = 70 degrees.

The central portion 28 further functions for the purpose of carrying equipment such as for instance a control unit 73 which is connected to the motors 14, 16 and all the above stated rotation sensors 17, 18, 22, 25. Also placed on the central portion 28 is a source of electrical energy in the form of a battery, which battery 74 is at least connected to each of the drive motors 14, 16 and to the control unit. The vehicle 1 also comprises (not shown) for each drive motor 14, 16 a separate frequency controller for converting a control signal from the control unit to a current and voltage for the drive motor 14, 16 connected to the associated frequency controller.

As shown particularly in figure 2, the luggage carrying part 3 comprises on a first outer end surface, at the first outer end 5 of the chassis beam 4, a first connecting plate element 50 and on an opposite second outer end surface, at the second outer end of the chassis beam 4, a second connecting plate element 52. The connecting plate element 52, which is embodied similarly to the connecting plate element 50, is mounted at the position of a centrally located lowest point 53 thereof with a screw connection on the vertical outer end surface of the second outer end 12 of the chassis beam 4 of the travelling part 2. The connecting plate elements 50 and 52 further have a strengthening part extending at right angles to the plane of the relevant element 50, 52 in the longitudinal direction 13 to a position under the luggage carrying part 3 and comprising a strip 55 which, in the mounted situation of the luggage carrying part 3 on the travelling part 2, lies against an upper surface of the chassis beam 4 at the position of the end part 12 and is there secured with a screw connection. Extending obliquely outward and upward from the strip 55 are inclining strengthening ribs 57 which are fixed at a higher part to the connecting plate element 52. A central strengthening rib 58 also extends oriented obliquely upward and is fixed centrally to a higher part of the connecting plate part 52. The connecting plate elements 50, 52 are in this way secured firmly to the chassis beam 4 at both outer ends 5, 12 of the chassis beam 4.

A part 60, 62 of the connecting plate elements 50, 52 extends above the carrying surface 64 and thereby forms a guard on the opposite end surfaces of the vehicle 1 and efficiently prevent undesired movement of an item of luggage 65 off the carrying surface 64.

The carrying surface 64 is formed by a conveyor belt 70 trained round respective pulley members 67, 69 running on respective longitudinal sides 66, 68 parallel to the chassis beam 4. The pulley members 67, 69 are bearing-mounted between the connecting plate elements 50, 52. The conveyor belt 70 fills the whole area defined between the two end surfaces of the vehicle 1 which are bounded by guards 60 and 62 and said longitudinal sides 66, 68 of the vehicle 1. The conveyor belt 70 thus has a direction of transport transversely of the longitudinal direction 13 of the vehicle 1. The conveyor belt 70 is driven by a drive motor 71 which is connected via a belt transmission 77 to the pulley member 67. The electric motor 71 and the belt transmission 77 are suspended from the connecting plate element 50. The pulley members 67, 69 have an outer toothing while the conveyor belt 70 has on its side facing toward the pulley members 67, 69 a toothing which is adapted to the toothing on the pulley members 67, 69. Provided under the higher part of the conveyor belt 70, which forms the carrying surface 64, and between the connecting plate elements 50, 52 and supported by longitudinal girders 84 are a number of transverse girders 86 for sliding support of the higher part of the conveyor belt 70 forming the carrying surface 64.

The luggage carrying part 3 has respective partitions 75 and 72 at both longitudinal sides 66, 68 of the vehicle 1. The partition 72, and also the partition 75 present on the opposite longitudinal side, are guided in slots 74, 76 arranged in the respective connecting plate elements 52, 50, which slots 74, 76 extend in vertical direction transversely of the product carrying surface 64. The partition 72 can hereby move in vertical direction from an inactive position as shown in figure 2, in which the partition 72 is situated below the carrier surface 64, to an active position as shown in figure 1 in which the partition 72 extends to a position above the carrying surface 64 so as to thus form on the longitudinal side 68 of the vehicle 1 a guard for the area which is defined above the product carrying surface 64 and on which an item of luggage 65 can be situated. When the two partitions 72, 75 are situated in the active position as shown in figure 1, it is made impossible for an item of luggage 65 situated on the carrying surface 64 to slide off the carrying surface 64 during travel of the vehicle 1, for instance when taking a bend or during acceleration or braking.

Said movement of the partition 72 is brought about by means of the electric drive motor 78 which is connected via a chain transmission 80 to a pinion which runs over a gear rack provided on the partition 72 so as to enable reciprocal movement of the partition 72 through the slots 74, 76. A gear rack is provided on both outer end surfaces of the partition 72.The pinion located on the side of the motor 78 is connected via a connecting shaft 82 to a further pinion which is provided on the opposite end surface and which runs over a gear rack at the position of the slot 76. The connecting shaft 82 is bearing-mounted between the connecting plate elements 50 and 52. Imposing said movement at both end surfaces of the partition 72 effectively prevents misalignment, or movement of the partition 72 out of square in the slots. The same applies for the partition 75, the movement of which is brought about by the drive motor 79 via the chain transmission 81 and gear racks-pinions.

Said electric drive motors 78, 79 and the electric drive motor 71 for driving the conveyor belt 70 are all connected to the control unit of the vehicle 1 such that, at a command from the control unit, the partitions 72, 75 can be moved upward or downward between the active and the passive position thereof and the conveyor belt 70 is movable as desired in a transverse direction. The control of the partitions 72, 75 and the conveyor belt 70 is generally such that the partitions 72, 75 are in the active position during travel, wherein the conveyor belt 70 is stationary. In the case an item of luggage is being unloaded from the vehicle 1, one of said partitions 72, 75 usually moves from its active to its passive position. The conveyor belt 70 is driven such that, via the opening on a longitudinal side of the vehicle 1 created by the downward movement of the partition 72, the item of luggage present on the carrying surface 64 is moved off the vehicle and for instance onto a discharge conveyor at the upstream outer end adjacently of which the vehicle has taken up position.

The control unit 73 has a processor and memory element 96. Using the processor the operations or steps to be specified below can be performed by means of a control algorithm for performing said steps which is stored in the memory element. The control unit 73 can further comprise transmission means, such as in the form of a (schematically shown) transmitting and receiving module 91 for wireless communication 92 with a (schematically shown) transmitting and receiving module 94 of a (schematically shown) central control unit 93 of a transport system for objects such as items of luggage comprising a number of the above described vehicles, usually several tens to several hundreds, which can each communicate wirelessly with the central control unit. At a command from the central control unit the vehicle can be controlled here such that it travels for instance independently along a predetermined route from a first location to a second for the purpose of transporting one (or more) object(s) such as item(s) of luggage between said locations.

## Claims

1. An automatically controlled vehicle (1) for transporting an object (65) such as an item of luggage or goods similar thereto such as a parcel, the vehicle comprising:
- a chassis having on an upper side a carrying surface (64) for the object,
- a first wheel support arm (6) connected to the chassis for pivoting about a first pivot axis (8) and having respectively a left and right first wheel (7) at the opposite outer ends thereof,
- a second wheel support arm (9) connected to the chassis for pivoting about a second pivot axis (11) located at a distance from the first pivot axis (8) and having respectively a left and right second wheel (10) at the opposite outer ends thereof,
- per wheel (7; 10) an electric drive motor (14; 16) connected thereto for driving the relevant wheel,
- a control unit (73) for separate control of each of the drive motors,
- a source of electrical energy (74) such as a battery which is connected to each of the drive motors and to the control unit,
wherein the chassis is formed at least substantially by an elongate central chassis beam (4) extending in a longitudinal direction of the vehicle (1), wherein the first wheel support arm (6) is connected to the chassis beam (4) at a first distance from a first outer end (5) of the chassis beam, and wherein the second wheel support arm (9) is connected to the chassis beam at a second distance from a second outer end (12) of the chassis beam,
the vehicle (1) being **characterized in that** it further comprises a substantially rectangularly shaped object carrying part (3) with an object carrying element (70) which defines the carrying surface (64), wherein the object carrying part (3) is connected at a first outer end thereof to the chassis beam (4) with a first connecting member (50) closer to the first outer end (5) than the first wheel support arm (6), and is connected at a second outer end thereof to the chassis beam (4) with a second connecting member (52) closer to the second outer end (12) than the second wheel support arm (9).

2. A vehicle according to claim 1, wherein the chassis beam (4) has a length which is at least substantially equal to a length of the vehicle (1) as seen in longitudinal direction, wherein the first and the second distance each lie in a range of 10 percent to 30 percent of the length of the chassis beam (4), and are preferably each about 20 percent of the length of the chassis beam.

3. A vehicle according to claim 1 or 2, wherein the vehicle (1) has a width as seen in transverse direction of the vehicle wherein a track width of the wheels of both the first wheel support arm (6) and the second wheel support arm (9) lies in the range of 50 percent to 75 percent of the width of the vehicle, and is preferably about 65 percent of the width of the vehicle.

4. A vehicle according to any one of the preceding claims, wherein the object carrying part is clear of the chassis beam (4) between the first and second connecting members (50; 52).

5. A vehicle according to any one of the preceding claims, wherein the first and second connecting members each comprise a connecting plate element (50; 52) which at the position of the associated respective outer end (5; 12) of the chassis beam (4) is connected fixedly thereto and which extends from the chassis beam laterally and upward therefrom such that the object carrying element (64) is supported at least at the corners thereof by the connecting plate elements.

6. A vehicle according any one of the preceding claims, wherein the vehicle (1) comprises a conveyor belt (70) which is oriented transversely of the longitudinal direction of the vehicle and is drivable with a drive and which defines the carrying surface (64).

7. A vehicle according to claim 6, wherein the object carrying element comprises the conveyor belt (70), wherein the conveyor belt is trained round respective pulley members (67, 69) at the position of opposite longitudinal sides (66, 68) of the object carrying part (3).

8. A vehicle according any one of the preceding claims, wherein the vehicle (1) has guards extending above the level of the carrying surface (64) on at least a part of the peripheral sides of the carrying surface.

9. A vehicle according to claims 5, 7 and 8, wherein the pulley members (67, 69) extend between the connecting plate elements (50; 52), and wherein the connecting plate elements extend above the conveyor belt (70) on the opposite transverse sides thereof so as to there form a respective transverse guard for an object present on the carrying surface (64).

10. A vehicle according any one of the preceding claims, comprising on both the opposite longitudinal sides (66, 68) of the carrying surface (64) a longitudinal guard (75, 72) which is movable in height direction of the vehicle by a moving device (78) between an inactive position, in which the longitudinal guard lies under the carrying surface (64), and an active position in which the longitudinal guard extends above the carrying surface.

11. A vehicle according to claim 10 and according to claim 5 or a claim dependent thereon, wherein the longitudinal guards (75, 72) comprise a plate element which extends in height direction along a longitudinal side (66, 68) of the carrying surface (64) and which is guided at opposite end sides in slots (74, 76) in the connecting plate elements (50, 52).

12. Transport system for objects such as items of luggage or goods similar thereto such as parcels, comprising a number of vehicles (1) according to one or more of the preceding claims 1-11, and a central control unit (93) for controlling each of the vehicles such that an object can be transported with a vehicle from a first location to a second location at a distance therefrom.

## Patentansprüche

1. Automatisch gesteuertes Fahrzeug (1) zum Transportieren eines Objektes (65), beispielsweise eines Gepäckstückes oder ähnlicher Waren, beispielsweise eines Pakets, wobei das Fahrzeug umfasst:
- ein Fahrgestell, das an einer Oberseite eine tragende Fläche (64) für das Objekt aufweist,
- einen ersten Radstützarm (6), der zum Schwenken um eine erste Schwenkachse (8) mit dem Fahrgestell verbunden ist und an den gegenüberliegenden äußeren Enden davon ein linkes bzw. ein rechtes erstes Rad (7) aufweist,
- einen zweiten Radstützarm (9), der zum Schwenken um eine zweite Schwenkachse (11), die in einem Abstand von der ersten Schwenkachse (8) gelegen ist, mit dem Fahrgestell verbunden ist, und an den gegenüberliegenden äußeren Enden davon ein linkes bzw. ein rechtes zweites Rad (10) aufweist,
- pro Rad (7; 10) einen elektrischen Antriebsmotor (14; 16), der zum Antreiben des entsprechenden Rades damit verbunden ist,
- eine Steuereinheit (73) zur getrennten Steuerung jedes der Antriebsmotoren,
- eine Quelle elektrischer Energie (74) wie einer Batterie, die mit jedem der Antriebsmotoren und mit der Steuereinheit verbunden ist,
wobei das Fahrgestell wenigstens wesentlich durch einen langgestreckten zentralen Fahrgestellträger (4) gebildet ist, der sich in einer Längsrichtung des Fahrzeugs (1) erstreckt, wobei der erste Radstützarm (6) in einem ersten Abstand von einem ersten äußeren Ende (5) des Fahrgestellträgers mit dem Fahrgestellträger (4) verbunden ist und wobei der zweite Radstützarm (9) in einem zweiten Abstand von einem zweiten äußeren Ende (12) des Fahrgestellträgers mit dem Fahrgestellträger verbunden ist,
wobei das Fahrzeug (1) **dadurch gekennzeichnet ist, dass** es ferner ein im Wesentlichen rechteckförmiges, objekttragendes Teil (3) mit einem objekttragenden Element (70) umfasst, das die tragende Fläche (64) definiert, wobei das objekttragende Teil (3) an einem ersten äußeren Ende davon mit dem Fahrgestellträger (4) mit einem ersten Verbindungsteil (50) näher zu dem ersten äußeren Ende (5) als der erste Radstützarm (6) verbunden ist und an einem zweiten äußeren Ende davon mit dem Fahrgestellträger (4) mit einem zweiten Verbindungsteil (52) näher zu dem zweiten äußeren Ende (12) als der zweite Radstützarm (9) verbunden ist.

2. Fahrzeug nach Anspruch 1, wobei der Fahrgestellträger (4) eine Länge aufweist, die wenigstens wesentlich gleich einer Länge des Fahrzeugs (1) in Längsrichtung gesehen ist, wobei der erste und der zweite Abstand jeweils in einem Bereich von 10 Prozent bis 30 Prozent der Länge des Fahrgestellträgers (4) liegen, bevorzugt jeweils etwa 20 Prozent der Länge des Fahrgestellträgers.

3. Fahrzeug nach Anspruch 1 oder 2, wobei das Fahrzeug (1) in Querrichtung des Fahrzeugs gesehen eine Breite aufweist, wobei eine Spurweite der Räder sowohl des ersten Radstützarms (6) als auch des zweiten Radstützarms (9) in dem Bereich von 50 Prozent bis 75 Prozent der Breite des Fahrzeugs liegt, bevorzugt etwa 65 Prozent der Breite des Fahrzeugs.

4. Fahrzeug nach einem der vorhergehenden Ansprüche, wobei das objekttragende Teil zwischen dem ersten und dem zweiten Verbindungsteil (50; 52) einen Abstand zu dem Fahrgestellträger (4) hat.

5. Fahrzeug nach einem der vorhergehenden Ansprüche, wobei das erste und das zweite Verbindungsteil jeweils ein Verbindungsplattenelement (50; 52) umfassen, das an der Position des entsprechenden verbundenen äußeren Endes (5; 12) des Fahrgestellträgers (4) fest damit verbunden ist und das sich derart von dem Fahrgestellträger seitlich und aufwärts davon erstreckt, dass das objekttragende Element (64) wenigstens an den Ecken davon von den Verbindungsplattenelementen gestützt wird.

6. Fahrzeug nach einem der vorhergehenden Ansprüche, wobei das Fahrzeug (1) ein Förderband (70) umfasst, das quer zu der Längsrichtung des Fahrzeugs ausgerichtet ist und mit einem Antrieb fahrbar ist und das die tragende Fläche (64) definiert.

7. Fahrzeug nach Anspruch 6, wobei das objekttragende Element das Förderband (70) umfasst, wobei das Förderband rund um entsprechende Riemenscheibenteile (67, 69) an der Position gegenüberliegender Längsseiten (66, 68) des objekttragenden Teils (3) geführt wird.

8. Fahrzeug nach einem der vorhergehenden Ansprüche, wobei das Fahrzeug (1) Schutzeinrichtungen aufweist, die sich an wenigstens einem Teil der Umfangsseiten der tragenden Fläche über der Ebene der tragenden Fläche (64) erstrecken.

9. Fahrzeug nach den Ansprüchen 5, 7 und 8, wobei sich die Riemenscheibenteile (67, 69) zwischen den Verbindungsplattenelementen (50; 52) erstrecken und wobei sich die Verbindungsplattenelemente oberhalb des Förderbandes (70) auf die gegenüberliegenden Querseiten davon erstrecken, um so dort eine jeweilige Querschutzeinrichtung für ein Objekt zu bilden, das auf der tragenden Fläche (64) vorhanden ist.

10. Fahrzeug nach einem der vorhergehenden Ansprüche, auf den beiden gegenüberliegenden Längsseiten (66, 68) der tragenden Fläche (64) eine Längsschutzeinrichtung (75, 72) umfassend, die durch eine Bewegungseinrichtung (78) zwischen einer inaktiven Position, in der die Längsschutzeinrichtung unter der tragenden Fläche (64) liegt, und einer aktiven Position, in der sich die Längsschutzeinrichtung über der tragenden Fläche erstreckt, in Höhenrichtung des Fahrzeugs beweglich ist.

11. Fahrzeug nach Anspruch 10 und nach Anspruch 5 oder einem davon abhängigen Anspruch, wobei die Längsschutzeinrichtungen (75, 72) ein Plattenelement umfassen, das sich in Höhenrichtung entlang einer Längsseite (66, 68) der tragenden Fläche (64) erstreckt und das an gegenüberliegenden Endseiten in Schlitzen (74, 76) in den Verbindungsplattenelementen (50, 52) geführt ist.

12. Transportsystem für Objekte, beispielsweise Gepäckstücke oder ähnliche Waren, beispielsweise Pakete, mehrere Fahrzeuge (1) nach einem oder mehreren der vorhergehenden Ansprüche 1 bis 11 sowie eine zentrale Steuereinheit (93) zum Steuern jedes der Fahrzeuge auf solche Weise umfassend, so dass ein Objekt mit einem Fahrzeug von einem ersten Ort zu einem zweiten Ort in einem Abstand davon transportiert werden kann.

## Revendications

1. Véhicule à commande automatique (1) pour transporter un objet (65) tel qu'un bagage ou des marchandises similaires à celui-ci telles qu'un colis, le véhicule comprenant :
- un châssis ayant sur un côté supérieur, une surface porteuse (64) pour l'objet,
- un premier bras de support de roues (6) relié au châssis pour pivoter autour d'un premier axe de pivotement (8) et ayant respectivement des premières roues gauche et droite (7) au niveau de ses extrémités extérieures opposées,
- un deuxième bras de support de roues (9) relié au châssis pour pivoter autour d'un deuxième axe de pivotement (11) situé à une certaine distance du premier axe de pivotement (8) et ayant respectivement des deuxièmes roues gauche et droite (10) au niveau de ses extrémités extérieures opposées,
- un moteur d'entraînement électrique (14 ; 16) par roue (7 ; 10) qui lui est relié pour entraîner la roue correspondante,
- une unité de commande (73) pour commander séparément chacun des moteurs d'entraînement,
- une source d'énergie électrique (74) telle qu'une batterie qui est reliée à chacun des moteurs d'entraînement et à l'unité de commande,
où le châssis est formé au moins essentiellement par une poutre de châssis centrale allongée (4) s'étendant dans une direction longitudinale du véhicule (1), où le premier bras de support de roues (6) est relié à la poutre de châssis (4) à une première distance d'une première extrémité extérieure (5) de la poutre de châssis, et où le deuxième bras de support de roues (9) est relié à la poutre de châssis à une deuxième distance d'une deuxième extrémité extérieure (12) de la poutre de châssis,
le véhicule (1) étant **caractérisé en ce qu'**il comprend en outre une partie porteuse d'objet (3) de forme essentiellement rectangulaire avec un élément porteur d'objet (70) qui définit la surface porteuse (64), où la partie porteuse d'objet (3) est reliée au niveau d'une première extrémité extérieure de celle-ci à la poutre de châssis (4) par un premier élément de liaison (50) plus proche de la première extrémité extérieure (5) que le premier bras de support de roues (6), et est reliée au niveau d'une deuxième extrémité extérieure de celle-ci à la poutre de châssis (4) par un deuxième élément de liaison (52) plus proche de la deuxième extrémité extérieure (12) que le deuxième bras de support de roues (9).

2. Véhicule selon la revendication 1, dans lequel la poutre de châssis (4) a une longueur qui est au moins essentiellement égale à une longueur du véhicule (1) telle que vue dans la direction longitudinale, où les première et deuxième distances se situent chacune dans une plage allant de 10 pour cent à 30 pour cent de la longueur de la poutre de châssis (4), et sont chacune de préférence d'environ 20 pour cent de la longueur de la poutre de châssis.

3. Véhicule selon la revendication 1 ou 2, dans lequel le véhicule (1) a une largeur telle que vue dans la direction transversale du véhicule, où une largeur de voie des roues à la fois du premier bras de support de roues (6) et du deuxième bras de support de roues (9) se situe dans la plage allant de 50 pour cent à 75 pour cent de la largeur du véhicule, et est de préférence d'environ 65 pour cent de la largeur du véhicule.

4. Véhicule selon l'une quelconque des revendications précédentes, dans lequel la partie porteuse d'objet est dégagée de la poutre de châssis (4) entre les premier et deuxième éléments de liaison (50 ; 52).

5. Véhicule selon l'une quelconque des revendications précédentes, dans lequel les premier et deuxième éléments de liaison comprennent chacun un élément en plaque de liaison (50 ; 52) qui à la position de l'extrémité extérieure respective associée (5 ; 12) de la poutre de châssis (4), est relié de manière fixe à celle-ci et qui s'étend de la poutre de châssis latéralement et vers le haut à partir de celle-ci de sorte que l'élément porteur d'objet (64) soit supporté au moins aux coins de celui-ci par les éléments en plaque de liaison.

6. Véhicule selon l'une quelconque des revendications précédentes, dans lequel le véhicule (1) comprend une courroie transporteuse (70) qui est orientée transversalement par rapport à la direction longitudinale du véhicule et qui peut être entraînée par un dispositif d'entraînement et qui définit la surface porteuse (64).

7. Véhicule selon la revendication 6, dans lequel l'élément porteur d'objet comprend la courroie transporteuse (70), où la courroie transporteuse est entraînée autour d'éléments de poulie respectifs (67, 69) à la position des côtés longitudinaux opposés (66, 68) de la partie porteuse d'objet (3).

8. Véhicule selon l'une quelconque des revendications précédentes, dans lequel le véhicule (1) a des protections s'étendant au-dessus du niveau de la surface porteuse (64) sur au moins une partie des côtés périphériques de la surface porteuse.

9. Véhicule selon les revendications 5, 7 et 8, dans lequel les éléments de poulie (67, 69) s'étendent entre les éléments en plaque de liaison (50 ; 52), et où les éléments en plaque de liaison s'étendent au-dessus de la courroie transporteuse (70) sur ses côtés transversaux opposés de manière à y former une protection transversale respective pour un objet présent sur la surface porteuse (64).

10. Véhicule selon l'une quelconque des revendications précédentes, comprenant sur les deux côtés longitudinaux opposés (66, 68) de la surface porteuse (64) une protection longitudinale (75, 72) qui est mobile dans la direction de la hauteur du véhicule par un dispositif de déplacement (78) entre une position inactive, dans laquelle la protection longitudinale est située sous la surface porteuse (64), et une position active dans laquelle la protection longitudinale s'étend au-dessus de la surface porteuse.

11. Véhicule selon la revendication 10 et selon la revendication 5 ou une revendication qui en dépend, dans lequel les protections longitudinales (75, 72) comprennent un élément en plaque qui s'étend dans la direction de la hauteur le long d'un côté longitudinal (66, 68) de la surface porteuse (64) et qui est guidé à des côtés d'extrémité opposés dans des fentes (74, 76) dans les éléments en plaque de liaison (50, 52).

12. Système de transport d'objets tels que des bagages ou des marchandises similaires à ceux-ci, telles que des colis, comprenant un certain nombre de véhicules (1) selon une ou plusieurs des revendications précédentes 1 à 11, et une unité de commande centrale (93) pour commander chacun des véhicules de sorte qu'un objet puisse être transporté avec un véhicule d'un premier emplacement à un deuxième emplacement à une certaine distance de celui-ci.
